# FASCICULE DE BREVET EUROPEEN

(11) **EP 3 648 314 B1**
(45) Date de publication et mention de la délivrance du brevet: **08.05.2024**
(21) Numéro de dépôt: 19204507.8
(22) Date de dépôt: 22.10.2019
(51) Int. Cl.: H02K 1/278, H02K 3/52, H02K 29/03, H02K 1/14, H02K 15/02

(54) **MOTEUR ELECTRIQUE A COURANT CONTINU SANS BALAI AVEC UN COUPLE DE CRANTAGE REDUIT ET SON PROCEDE DE REALISATION**
BÜRSTENLOSER GLEICHSTROMMOTOR MIT EINEM REDUZIERTEN RASTMOMENT, UND SEIN HERSTELLUNGSVERFAHREN
BRUSHLESS DIRECT CURRENT ELECTRIC MOTOR WITH REDUCED DETENT TORQUE AND METHOD FOR MANUFACTURING SAME

(30) Priorité: 29.10.2018 FR 1860005
(43) Date de publication de la demande: 06.05.2020
(73) Titulaire: Circor Industria, 94420 Le Plessis Trevise (FR)
(72) Inventeur: Abraham, Sylvain, 49100 Angers (FR)
(74) Mandataire: Duxbury, Stephen

(56) Documents cités:
- EP-A1- 2 579 429
- EP-A2- 1 770 847
- TW-A- 201 236 318
- US-A1- 2008 191 578
- US-A1- 2016 315 508
- US-B1- 6 384 505

## Description

La présente invention concerne un moteur électrique à courant continu sans balai avec un couple de crantage réduit. Un tel couple de crantage, aussi désigné sous l'expression couple d'encochage, est également nommé par le terme anglais « cogging ou par l'expression anglaise « cogging torque ». Pour faciliter la lecture, le terme « cogging » sera préférentiellement utilisé par la suite.

L'invention concerne également un procédé de réalisation d'un tel moteur.

Un moteur à courant continu sans balais est communément désigné par l'appellation « moteur brushless ». Un tel moteur comprend un rotor, composé d'au moins un aimant permanent, et un stator comportant plusieurs bobines générant un champ magnétique. Les bobines sont alimentées de façon séquentielle. De la sorte on génère un champ magnétique tournant à la même fréquence que les tensions d'alimentation des phases. Le ou les aimant(s) permanent(s) du rotor cherche(nt) à chaque instant à s'orienter dans le sens du champ magnétique, ce qui induit le déplacement en rotation du rotor. Les tensions d'alimentation des phases sont adaptées continuellement pour que le champ reste en avance sur la position du rotor, afin d'obtenir un couple moteur. Un moteur brushless assure la conversion d'une énergie électrique en énergie magnétique puis en un mouvement mécanique de rotation.

Certains moteurs brushless sont configurés avec le rotor positionné autour du stator. Cette configuration permet d'obtenir un couple moteur élevé avec une fréquence de rotation relativement faible.

D'autres types de moteur brushless, plus fréquents, ont une configuration miroir, à savoir un rotor inséré dans le stator. Dans ce cas, les vitesses de rotation sont plus élevées pour un couple plus faible, à taille de moteur équivalente. Des moteurs brushless du type rotor dans stator sont utilisés dans certains domaines où un couple doit être fourni sous un encombrement réduit, avec un fonctionnement sécurisé et continu. On les rencontre, par exemple, dans le domaine aéronautique pour des actionneurs électromécaniques.

Par la suite, pour faciliter la lecture, l'invention sera décrite pour un moteur brushless avec le rotor inséré dans le stator, étant entendu que l'invention trouve son application également dans la configuration miroir, à savoir avec un rotor entourant le stator.

Dans la configuration illustrée, le stator forme un cylindre creux à base circulaire avec un volume central qui reçoit le rotor, également en forme de cylindre, plein, à base circulaire. Le rotor comprend un arbre d'entrainement d'un organe défini. Des cloisons radiales s'étendent entre le volume central et la paroi externe du stator. Les cloisons définissent entre elles des volumes unitaires ou encoches, ouverts en direction du rotor. De facto, ces encoches entourent le rotor lorsque ce dernier est introduit dans le volume central du stator. Ainsi, en section radiale, le stator présente une forme d'étoile ou plus exactement de bague étoilée.

Ces encoches permettent d'effectuer le bobinage, à savoir l'enroulement des fils de cuivre constitutifs de la bobine électromagnétique du stator. Il existe donc, en section transversale du stator, une alternance de zones pleines, en l'espèce les cloisons métalliques, et de zones ouvertes.

Le fonctionnement des moteurs brushless, quelle que soit leur configuration, génère un couple particulier dit cogging, cela du fait du décalage, permanent et continu, entre le champ magnétique et l'orientation des aimants, lors de la rotation du rotor par rapport au stator.

Pour mémoire, selon une définition admise par la commission électrotechnique internationale (CEI) le couple dénommé par le terme de cogging est le couple cyclique d'un moteur électrique à aimant permanent résultant de la tendance du rotor et du stator à s'aligner dans une position correspondante à la réluctance magnétique minimale.

En d'autres termes, il s'agit du phénomène de résistance à la rotation, de type pas à pas, observé lorsque le rotor tourne par rapport au stator. En effet, lorsque les aimants se retrouvent face à une partie métallique avec une saillance une liaison magnétique s'établie et il y a alors une résistance à la rotation du rotor. En d'autres termes, le champ magnétique passe par la zone métallique où le volume d'air est le plus faible.

Dans certains domaines, un tel phénomène peut induire au minimum une gêne pour l'utilisateur d'un appareil ou dispositif mis en oeuvre par un tel moteur. Tel est le cas, à titre d'exemple non limitatif, dans le domaine aéronautique où des moteurs électriques à aimants permanents assurent la manoeuvre des commandes de vol. Toute gêne ou résistance dans la manipulation d'une commande de vol ressentie par le pilote peut affecter le pilotage de l'aéronef. En d'autres termes, il convient de préserver une manoeuvrabilité fluide et continue, sans résistance, des commandes de vol, étant entendu que toute résistance peut être interprétée par le pilote comme un problème sur un organe de vol.

Afin de remédier à ce phénomène de cogging tout en préservant autant que possible les caractéristiques et performances d'un moteur brushless, on connait, par exemple, par US-A-2018020923, US-A-2018019648, US-A-6784582, US-A-2005067913, US-A-2007273234, WO-A-2018008328, US 2016/315508 A1 des encoches du rotor fermées et/ou de formes plus ou moins complexes, et/ou des parois de formes complexes et/ou des cloisons du stator positionnées en décalé par rapport aux pôles des aimants. Ces solutions visent à diminuer autant que possible le cogging.

Plus généralement, l'une des solutions connues et fréquemment utilisées pour optimiser le cogging, c'est-à-dire diminuer celui-ci en affectant a minima les performances du moteur, consiste à fermer latéralement les encoches ou du moins à réduire l'ouverture au minimum : de la sorte, on créé un volume défini par des parois pleines, ou quasiment pleines, et il y a une continuité, ou une quasi continuité, de matière d'où un champ magnétique sans discontinuité, donc sans alternance sensible de zones pleine et vide. On conçoit que, lorsque le rotor entoure le stator, on a également une paroi pleine continue entre le stator et le rotor. Dans ce cas, la paroi fermée est orientée vers l'extérieur du stator.

On conçoit qu'une telle solution n'est pas aisée à mettre en oeuvre, en particulier du fait que le bobinage s'effectue manuellement. En d'autres termes, l'absence d'ouverture pour le passage rapide des fils de bobinage affecte la productivité. En effet, l'enroulement des fils de cuivre s'effectue par passage successifs par les ouvertures d'extrémité des encoches, par un « tricotage » manuel. Dans le cas où une ouverture minimale est préservée pour pouvoir réaliser le bobinage, il faut trouver une ouverture d'une largeur telle qu'elle assure le bobinage tout en réduisant au mieux le couple de cogging. Par ailleurs, le procédé de fermeture des encoches affecte également les performances du moteur d'autant que la fermeture des encoches n'est pas aisée à mettre en oeuvre.

On connait par US-A-2016/315508 A1 un moteur brushless comprenant un stator entourant un rotor. Sur le stator, des cloisons sont prévues et sont reliées par une paroi. Cette dernière comporte, sur sa face en regard avec le rotor, une zone de restriction magnétique réalisée par un lamage et un matériau ayant des propriétés magnétiques différentes de celles du reste du stator.

Il est connu que la fabrication du stator se fait par empilement de bagues avec des reliefs radiaux coplanaires au plan principal de la bague. Ces reliefs définissent les cloisons délimitant les encoches. La fermeture des encoches s'effectue par une pièce rapportée, à partir de l'espace annulaire interne des bagues empilées ou par entourage avec un cylindre intercalé entre les bagues et le manchon externe du stator, il y a une surépaisseur qui peut affecter le champ magnétique et/ou l'entrefer dans le cas où le rotor est logé dans le stator.

C'est à ces inconvénients qu'entend plus particulièrement remédier l'invention en proposant un moteur de type brushless avec un couple de crantage-ou cogging- limité, d'une construction aisée et simple tout en n'affectant pas ou peu les performances d'un tel moteur.

A cet effet, l'invention a pour objet un moteur à courant continu sans balais, comprenant un rotor composé d'au moins un aimant permanent, et un stator comportant au moins trois cloisons s'étendant radialement vers l'extérieur à partir d'un corps principal cylindrique à base circulaire, lesdites cloisons définissant entre elles des volumes de réception d'au moins trois bobines générant un champ magnétique, chaque volume étant fermé par une paroi, formée par une portion du corps, reliant lesdites cloisons, les bobines étant bobinées autour des cloisons et ladite paroi comportant, sur sa face orientée vers le rotor, au moins une zone de restriction magnétique, dans lequel la zone de restriction magnétique est formée par au moins une zone de moindre épaisseur de la paroi, et un manchon externe définissant la paroi extérieure du moteur entoure les parties actives du stator générant le champ magnétique et le rotor introduit dans la lumière du stator, et ledit manchon comprend des rainures longitudinales ménagées dans la paroi du manchon et s'étendant sur toute la longueur de la face intérieure du manchon, et au moins une zone de déformation est formée par des découpes ménagées dans l'épaisseur de la paroi entre deux rainures, ladite zone de déformation étant adaptée pour maintenir la configuration géométrique externe du manchon lors du montage des éléments constitutifs du moteur.

Ainsi, la présence d'une zone de restriction magnétique permet de guider le champ magnétique de sorte que les lignes de champ passent préférentiellement par l'aimant du rotor et non par les parois des encoches du stator. On oblige ainsi le champ magnétique à passer par tous les aimants, de manière continue, ce qui diminue au maximum l'effet de cogging, en évitant les zones à fort volume d'air.

Selon des aspects avantageux mais non obligatoires de l'invention, un tel moteur peut comprendre une ou plusieurs des caractéristiques suivantes:
- La zone de moindre épaisseur est définie par un lamage ou une rainure ménagé(e) dans la paroi.
- La zone de restriction magnétique est formée par au moins une portion de paroi en au moins un matériau peu magnétique ou amagnétique.

L'invention concerne également un procédé de fabrication d'un moteur conforme à l'une des revendications précédentes, caractérisé en ce qu'il comprend au moins les étapes suivantes :
- a) empilement de bagues métalliques préalablement usinées et configurées selon la section transversale du stator avec des cloisons délimitant des volumes ouverts de réception des bobines, l'empilement étant effectué sur une hauteur correspondant à la longueur voulue du stator,
- b) bobinage des fils de cuivre autour des cloisons sur l'empilement obtenu à l'étape a),

- c) montage par la technique du frettage de l'empilement obtenu à l'étape b) dans un manchon, un indexage angulaire par des ergots et des encoches assurant le positionnement de l'empilement par rapport au manchon,
   - d) insertion du rotor dans le volume de réception du stator,
   - e) formage de la partie des fils de cuivre apparent sur les extrémités ou chignon,
   - f) surmoulage final des éléments du moteur par de la résine.

Un tel procédé permet un montage précis, sans générer de surépaisseur grâce à la technique du frettage, connue en soi. Le frettage autorise un ajustement légèrement serrant entre les empilements et le corps du moteur, favorisant ainsi la conductivité magnétique et thermique entre les éléments.

Selon des aspects avantageux mais non obligatoires de l'invention, un tel procédé peut comprendre une ou plusieurs des étapes suivantes:
- après l'étape e) et avant l'étape f), une étape supplémentaire g) de rectification des diamètres externes et internes du stator est effectuée.
- Le manchon est obtenu par empilement de bagues.
- L'empilement de bagues constitutives du manchon est effectuée indépendamment des étapes a) à f).

L'invention sera mieux comprise et d'autres avantages de celle-ci apparaitront plus clairement à la lecture de la description qui va suivre de plusieurs modes de réalisation de l'invention, donnée à titre d'exemple non limitatif et faite en référence aux dessins suivants dans lesquels:
- La figure 1 est une vue en perspective d'un moteur brushless conforme à un mode de réalisation de l'invention,
- la figure 2 est une vue en coupe transversale, selon II-II du moteur de la figure 1, sans le stator et à une autre échelle,
- la figure 3 est une vue en perspective, à une autre échelle, du manchon constitutif du stator du moteur de la figure 1,
- la figure 4 est une vue en perspective, à plus grande échelle, d'une bague formant par empilement la partie active constitutive du stator du moteur de la figure 1,
- la figure 5 est une vue de face d'une bague similaire à celle de la figure 4, à plus grande échelle, selon un autre mode de réalisation et
- la figure 6 est une vue en section transversale, simplifiée, à une autre échelle, d'un moteur brushless sans le rotor avec la bague de la figure 5 insérée dans le manchon de la figure 3.

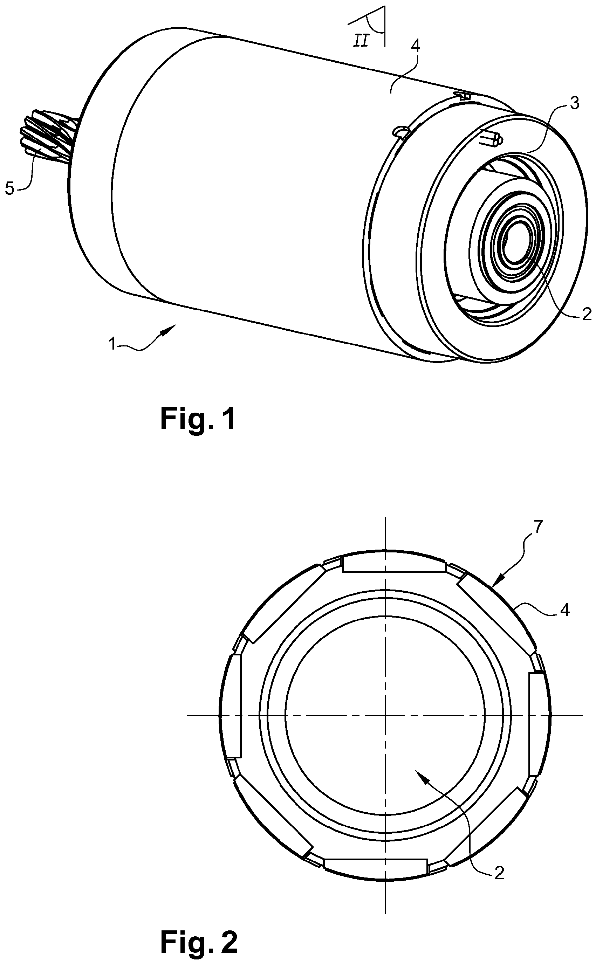

La figure 1 illustre un moteur à courant continu sans balais 1 communément désigné par l'appellation « moteur brushless ».

Un tel moteur est réalisé en matériau métallique et/ou composites au moins pour la partie active. Le reste du moteur, typiquement les éléments constitutifs de l'habillage externe, peuvent être en matériaux composites ou en polymères.

Ici, le moteur 1 est un moteur conforme à un mode de réalisation de l'invention dans lequel un rotor 2 est inséré dans un stator 3. Un manchon externe 4 entoure la partie active du stator 3 et définit la paroi extérieure du moteur 1. Un tel moteur 1 est utilisé dans divers domaines techniques, par exemple dans l'industrie aéronautique, spatiale, médicale, automobile, navale, agroalimentaire ou autre pour actionner un organe mobile soit en rotation soit en translation. Ici, un arbre d'entrainement en rotation 5 est directement fixé sur une extrémité du rotor 2 et prolonge ce dernier.

Le rotor 2 est pourvu sur sa face externe d'au moins deux aimants permanents. Les aimants sont, par exemple, collés sur la face externe, un pont de colle étant ménagé entre deux aimants voisins. Les aimants s'étendent sur toute la longueur du rotor 2. Les aimants, dont le nombre est adapté au dimensionnement du rotor et du moteur, sont disposés de sorte que les pôles nord et sud de deux aimants voisins soient alternativement orientés vers l'extérieur et vers l'intérieur du rotor 2. Dans un mode de réalisation non illustré le rotor 2 est creux. En variante, comme illustré à la figure 2, le rotor 2 est plein. Les aimants, sous l'action du champ magnétique généré par le stator 3 assure la rotation du rotor 2 et donc de l'arbre 5.

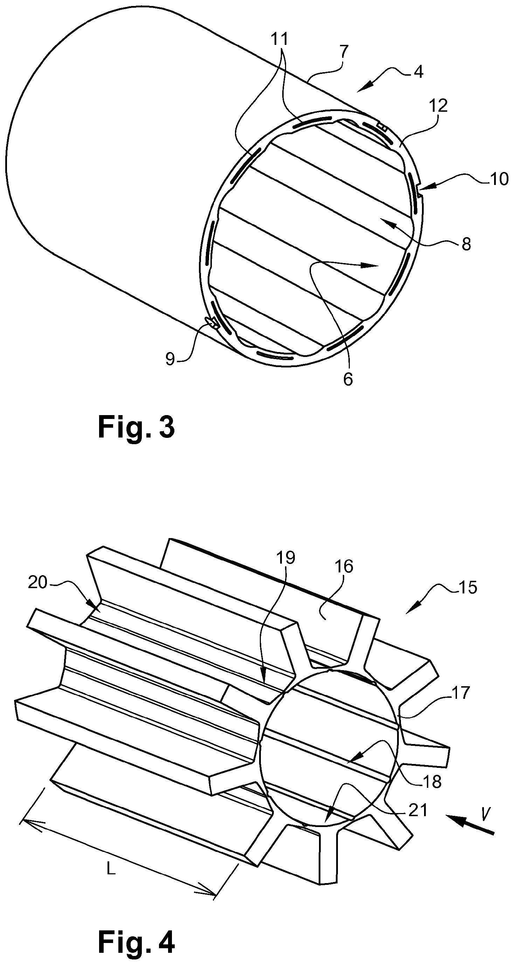

La figure 3 illustre le manchon externe 4 assurant la protection des parties actives du stator 3, et donc du rotor lorsque ce dernier est introduit dans la lumière du stator. Le manchon 4 présente une face externe 7 plane et unie. En variante, elle est d'un aspect différent et/ou elle comporte un marquage informatif. La face intérieure 6 du manchon 4 comprend des rainures longitudinales 8 ou lamages, à fond arrondi, s'étendant sur toute la longueur de la face 6 du manchon 4. Le manchon 4 est également pourvu, sur l'extérieur d'une de ses extrémités d'au moins un ergot 9 et d'au moins une encoche 10 définissant un organe d'indexation et de guidage lors du positionnement du manchon 4 sur la partie active du stator 3.

De plus, sur le manchon 4, une zone de déformation est prévue. En l'espèce elle est formée par une pluralité de découpes 11 ménagées dans l'épaisseur de la paroi 12 du manchon 4. Cette zone de déformation est adaptée pour absorber la déformation de la partie active du stator 3 en forme d'étoile, inséré dans le manchon et ainsi maintenir la circularité extérieure du manchon 4.

La partie active du stator 3 est la partie du stator 3 pourvue du bobinage et générant le champ magnétique. La partie active du stator est formée par les parties actives des bagues 15 constitutives par empilement du stator. Une telle partie active est, par analogie à la figure 4, cylindrique, creuse et à base circulaire. La lumière interne 14 de chaque bague 15 est de dimensions et de forme adaptées pour loger une portion du rotor 2 tout en assurant sa libre rotation, cela avec un minimum de frottements.

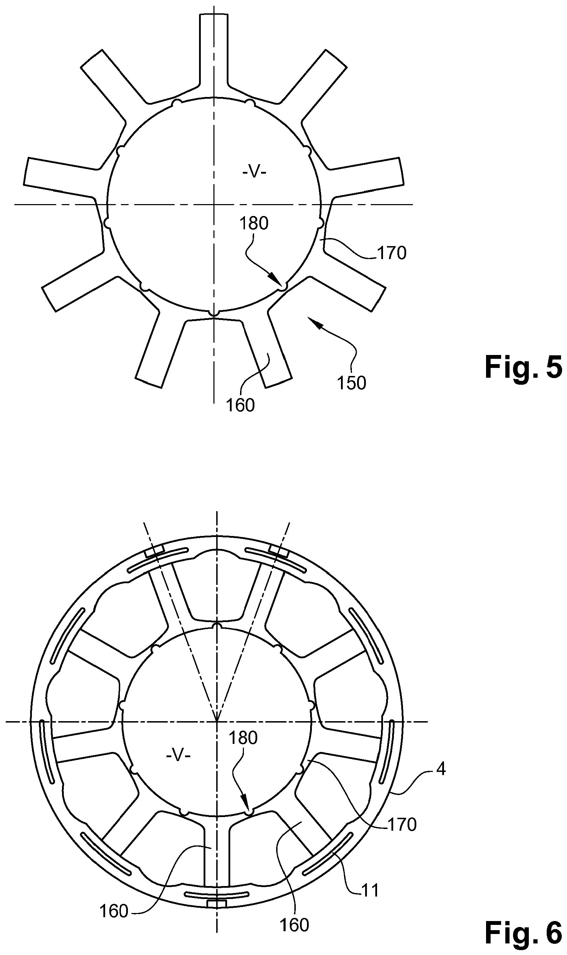

Plusieurs cloisons 16 s'étendent radialement vers l'extérieur de chaque bague 15 à partir du corps annulaire 17 de la bague 15. Ces cloisons 16 sont configurées en patte rectangulaire et plate. Les cloisons 16 ont une longueur égale à la longueur L de la bague 15 et sont parallèles à cette longueur. Les cloisons 16 sont régulièrement disposées sur le corps annulaire 17. Ici l'espace entre deux cloisons 16 voisines est constant. Comme cela apparaitra plus clairement à la figure 6, deux cloisons voisines sont ainsi reliées par une paroi formée par une portion du corps annulaire. On définit ainsi entre les cloisons et la portion du corps annulaire une portion du volume de réception du bobinage.

Entre deux cloisons 16 voisines, une rainure longitudinale 18 est ménagée, sur la face intérieure 21 du corps annulaire 17. Cette rainure 18 a son ouverture orientée vers l'intérieur du corps 17. Un rainurage ou lamage 19 est positionné sur la face externe 20 du corps annulaire 17, en face de la rainure 18. On réalise par la rainure 18 et le lamage 19 une zone de moindre épaisseur.

Comme cela ressort de la figure 4, les rainures 18 et le lamage19 sont régulièrement répartis sur le corps 17, cela sur toute la longueur L de la bague 15. Les rainures 18 et le lamage 19 sont réalisés par enlèvement de matière sur le corps 17. Cette diminution de l'épaisseur nominale du corps 17 dans une zone donnée, donc une fois les bagues 15 empilées une diminution de la partie active du stator 3, induit une restriction magnétique.

La figure 5 illustre un autre mode de réalisation d'une bague 150 similaire à la bague 15. Ici, seules sont présentes des rainures 180, le rainurage ou lamage sur la face externe du corps 170 est absent. Dans tous les cas, les rainures 180 assurent, comme les rainures 18, une diminution de l'épaisseur de la partie active du stator lorsque les bagues 150 sont empilées, et donc définissent une zone de restriction magnétique.

Dans un autre mode de réalisation non illustrée, l'empilement est effectué à partir de bagues équivalentes, par exemple, aux caractéristiques combinées d'une bague 15 et 150.

Comme cela ressort de la figure 6, lorsque le stator 3 est monté, donc lorsque la partie active est bobinée et qu'elle est insérée dans le manchon 4, les rainures 180 se trouvent sensiblement en position centrale entre deux cloisons 160 voisines, le bobinage, non illustré, étant en place. Comme cela apparait à la figure 6, la présence de rainures 180, du fait de la quantité moindre de matériau magnétique à cet endroit, dirige le champ magnétique de sorte que celui-ci ne passe pas directement d'une cloison 160 à une autre mais effectue un circuit par un des aimants du rotor, ce dernier étant introduit dans le volume V défini pour la lumière des bagues 150 empilées. Il y a alors un entrainement en rotation du rotor, ses aimants cherchant à s'aligner sur le champ magnétique. Du fait de la présence des rainures 180, donc de la zone de restriction magnétique sur l'ensemble de la circonférence du corps 170, on induit un circuit régulier et constant qui permet d'éviter le cogging. Par ailleurs, la présence de découpes 11 dans le manchon 4 assure une configuration parfaitement circulaire de l'intérieur du manchon, donc évite toute déformation des bagues empilées, en particulier au niveau des cloisons. Cela participe également à assurer une rotation régulière du rotor.

On conçoit que le fonctionnement est identique avec les bagues 15 empilées selon le mode de réalisation représenté à la figure 4.

En variante, dans un autre mode de réalisation, la zone de restriction magnétique est obtenue par un changement de matériau. Typiquement, on utilise un ou des matériaux dont la conductivité magnétique est plus faible que celle du reste du corps 17 ; 170 et des cloisons 16 ; 160. On peut également utiliser des matériaux amagnétiques.

Par ailleurs, les rainures 18 ; 180 permettent, du fait du procédé de réalisation du stator 3, de réaliser un ajustement précis, avec un contact optimal entre les pièces pour assurer la conductivité thermique et magnétique, cela sans déformation des pièces constitutives.

Le montage d'un tel moteur est maintenant décrit en référence aux diverses figures. Pour cela, on effectue en premier un empilement des bagues 15 ; 150 constitutives de la partie active du stator 3. Ces bagues 15 ; 150 ont été préalablement usinées et configurées, selon la section transversale du stator à obtenir. Le nombre de bagues à empiler est fonction de la longueur voulue du stator 3. Une fois l'empilement réalisé, on effectue le bobinage en enroulant le fil de cuivre autour des cloisons 16 ; 160 à partir de la zone ouverte. Un tel bobinage est aisé à réaliser, aucun obstacle ne gênant la manipulation.
Une fois le bobinage effectué, on réalise un empilement de bagues circulaires, non illustrées, constitutives du manchon 4. On conçoit que l'empilement du manchon est indépendant du reste du procédé et qu'il peut, avantageusement, être effectué en un autre lieu et /ou un autre moment que simultanément au bobinage. En d'autres termes, il est possible de réaliser le manchon 4 par empilement d'un nombre de bagues défini selon la longueur du manchon à obtenir de manière indépendante du montage de la partie active et du bobinage. On conçoit que lorsque le bobinage est effectué il est intéressant de fermer rapidement les volumes recevant les bobines en mettant en place l'empilement de bagues constitutives du manchon.

On insère ensuite la partie active obtenue précédemment dans le manchon 4 par la technique du frettage. Pour mémoire, on désigne par frettage l'assemblage de deux pièces avec un ajustement serré. L'assemblage est effectué par chauffage de la pièce extérieure ou frette, ce qui permet d'introduire la pièce à fretter, froide, dans la frette ou dans un logement prévu dans la frette. L'ajustement entre les pièces se fait par refroidissement des pièces à une même température. Une telle technique permet un ajustement homogène et similaire en tout point de la zone d'assemblage des pièces entre elles.

Le positionnement des pièces lors du frettage est facilité par la présence des ergots 9 et encoches 10 qui permettent une position indexée des pièces.

Les rainures 18 ; 180 permettent également, lors de variations de température des pièces de chaque bague 15 ; 150 de se déformer, et donc de s'ajuster, indépendamment les unes des autres, cela de façon élastique.

Les zones de déformation 11 du manchon 4 évoquées précédemment participent également à définir un comportement élastique du manchon 4. Il en résulte des contraintes et déformations réduites sur l'ensemble du stator 3.

On finalise le montage du moteur en mettant en forme les portions de fils cuivre du bobinage apparaissant sur les extrémités. Cette étape est connue sous la dénomination de réalisation des chignons.

Une étape finale consiste à surmouler l'ensemble des éléments du stator et du rotor par une résine protectrice.

## Revendications

1. Moteur à courant continu sans balais (1), comprenant un rotor (2) composé d'au moins un aimant permanent, et un stator (3) comportant au moins trois cloisons (16 ; 160) s'étendant radialement vers l'extérieur à partir d'un corps principal cylindrique à base circulaire (17 ; 170), lesdites cloisons (16 ; 160) définissant entre elles des volumes de réception d'au moins trois bobines générant un champ magnétique, chaque volume étant fermé par une paroi, formée par une portion du corps (17 ; 170), reliant lesdites cloisons (16 ; 160), les bobines étant bobinées autour des cloisons et ladite paroi comportant, sur sa face orientée vers le rotor (2), au moins une zone de restriction magnétique, dans lequel la zone de restriction magnétique est formée par au moins une zone (18, 19 ; 180) de moindre épaisseur de la paroi, et un manchon (4) externe définissant la paroi extérieure du moteur (1) entoure les parties actives du stator (3) générant le champ magnétique et le rotor (2) introduit dans la lumière du stator (3), et ledit manchon (4) comprend des rainures longitudinales (8) ménagées dans la paroi (12) du manchon (4) et s'étendant sur toute la longueur de la face (6) intérieure du manchon (4), et au moins une zone de déformation est formée par des découpes (11) ménagées dans l'épaisseur de la paroi (12) entre deux rainures (8) , ladite zone de déformation étant adaptée pour maintenir la configuration géométrique externe du manchon (4) lors du montage des éléments constitutifs du moteur (1).

2. Moteur selon la revendication 1, **caractérisé en ce que** la zone de moindre épaisseur est définie par un lamage (19) ou une rainure (18 ; 180) ménagé(e) dans la paroi (17 ; 170).

3. Moteur selon la revendication 1, **caractérisé en ce que** la zone de restriction magnétique est formée par au moins une portion de paroi en au moins un matériau peu magnétique ou amagnétique.

4. Procédé de fabrication d'un moteur conforme à l'une des revendications précédentes, **caractérisé en ce qu'**il comprend au moins les étapes suivantes :
- a) empilement de bagues métalliques (15 ; 150) préalablement usinées et configurées selon la section transversale du stator (3) avec des cloisons (16 ; 160) délimitant des volumes ouverts de réception des bobines, l'empilement étant effectué sur une hauteur correspondant à la longueur voulue du stator (3),
- b) bobinage des fils de cuivre autour des cloisons (16 ; 160) sur l'empilement obtenu à l'étape a),
- c) montage par la technique du frettage de l'empilement obtenu à l'étape b) dans un manchon (4), un indexage angulaire par des ergots (9) et des encoches (10) assurant le positionnement de l'empilement par rapport au manchon (4),
- d) insertion du rotor (2) dans le volume de réception du stator (3),
- e) formage de la partie des fils de cuivre apparent sur les extrémités ou chignon,
- f) surmoulage final des éléments du moteur par de la résine.

5. Procédé selon la revendication 4, **caractérisé en ce qu'**après l'étape e) et avant l'étape f), une étape supplémentaire g) de rectification des diamètres externes et internes du stator est effectuée.

6. Procédé selon la revendication 4, **caractérisé en ce que** le manchon (4) est obtenu par empilement de bagues.

7. Procédé selon la revendication 6, **caractérisé en ce que** l'empilement de bagues constitutives du manchon (4) est effectuée indépendamment des étapes a) à f).

## Patentansprüche

1. Bürstenloser Gleichstrommotor (1), umfassend einen Rotor (2), der aus mindestens einem Permanentmagneten besteht, und einen Stator (3), der mindestens drei Trennwände (16; 160) aufweist, die sich von einem zylindrischen Hauptkörper mit kreisförmiger Basis (17; 170) radial nach außen erstrecken, wobei die Trennwände (16; 160) zwischen sich Volumina zum Aufnehmen von mindestens drei Spulen definieren, die ein Magnetfeld erzeugen, wobei jedes Volumen durch eine Wand verschlossen ist, die durch einen Abschnitt des Körpers (17; 170) ausgebildet ist, die die Trennwände (16; 160) verbindet, wobei die Spulen um die Trennwände herum aufgespult sind und die Wand auf ihrer dem Rotor (2) zugewandten Fläche mindestens einen Bereich mit magnetischer Beschränkung aufweist, wobei der Bereich mit magnetischer Beschränkung durch mindestens einen Bereich (18, 19; 180) geringerer Dicke der Wand ausgebildet ist, und eine äußere Muffe (4), die die äußere Wand des Motors (1) definiert, die aktiven Teile des Stators (3), der das Magnetfeld erzeugt, und den Rotor (2) umgibt, der in die Öffnung des Stators (3) eingeführt ist, und die Muffe (4) Längsnuten (8) aufweist, die in der Wand (12) der Muffe (4) vorgesehen sind und sich über die gesamte Länge der inneren Fläche (6) der Muffe (4) erstrecken, und mindestens ein Verformungsbereich durch Ausschnitte (11) ausgebildet ist, die in der Dicke der Wand (12) zwischen zwei Nuten (8) vorgesehen sind, wobei die Verformungszone zum Beibehalten der äußeren geometrischen Konfiguration der Muffe (4) bei der Montage der Bauelemente des Motors (1) angepasst ist.

2. Motor nach Anspruch 1, **dadurch gekennzeichnet, dass** der Bereich geringerer Dicke durch eine Senkung (19) oder eine Nute (18; 180) definiert ist, die in der Wand (17; 170) vorgesehen ist.

3. Motor nach Anspruch 1, **dadurch gekennzeichnet, dass** der Bereich mit magnetischer Beschränkung durch mindestens einen Wandabschnitt aus mindestens einem wenig magnetischen oder unmagnetischen Material ausgebildet ist.

4. Verfahren zum Herstellen eines Motors nach einem der vorstehenden Ansprüche, **dadurch gekennzeichnet, dass** es mindestens die folgenden Schritte umfasst:
- a) Stapeln von Metallringen (15; 150), die zuvor bearbeitet und gemäß dem Querschnitt des Stators (3) konfiguriert wurden, mit Trennwänden (16; 160), die offene Volumina zum Aufnehmen der Spulen begrenzen, wobei das Stapeln auf einer Höhe durchgeführt wird, die der gewünschten Länge des Stators (3) entspricht,
- b) Aufspulen der Kupferdrähte um die Trennwände (16; 160) auf den Stapel, der in Schritt a) erhalten wird,
- c) Montieren durch Schrumpftechnik des Stapels, der in Schritt b) erhalten wird, in einer Muffe (4), wobei eine Winkelindexierung durch Nasen (9) und Kerben (10) die Positionierung des Stapels relativ zu der Muffe (4) sicherstellt,
- d) Einsetzen des Rotors (2) in das Aufnahmevolumen des Stators (3),
- e) Umformen des Teils der Drähte aus sichtbarem Kupfer an den Enden oder dem Schaltende,
- f) endgültiges Umspritzen der Motorelemente mit Harz.

5. Verfahren nach Anspruch 4, **dadurch gekennzeichnet, dass** nach Schritt e) und vor Schritt f) ein zusätzlicher Schritt g) eines Berichtigens des Außen- und Innendurchmessers des Stators durchgeführt wird.

6. Verfahren nach Anspruch 4, **dadurch gekennzeichnet, dass** die Muffe (4) durch ein Stapeln von Ringen erhalten wird.

7. Verfahren nach Anspruch 6, **dadurch gekennzeichnet, dass** das Stapeln von Ringen, die die Hülse (4) bilden, unabhängig von den Schritten a) bis f) durchgeführt wird.

## Claims

1. Brushless DC motor (1), comprising a rotor (2) composed of at least one permanent magnet, and a stator (3) having at least three partitions (16; 160) extending radially outwardly from a cylindrical main body with a circular base (17; 170), said partitions (16; 160) defining between them volumes for receiving at least three coils generating a magnetic field, each volume being closed by a wall, formed by a portion of the body (17; 170), connecting said partitions (16; 160), the coils being wound around the partitions and said wall having, on its face oriented toward the rotor (2), at least one magnetic restriction zone, wherein the magnetic restriction zone is formed by at least one zone (18, 19; 180) of lesser thickness of the wall, and an outer sleeve (4), which defines the exterior wall of the motor (1), surrounds the active parts of the stator (3) generating the magnetic field and the rotor (2) introduced into the slot of the stator (3), and said sleeve (4) comprises longitudinal grooves (8) provided in the wall (12) of the sleeve (4) and extending over the entire length of the interior face (6) of the sleeve (4), and at least one deformation zone is formed by cutouts (11) made in the thickness of the wall (12) between two grooves (8), said deformation zone being suitable for maintaining the external geometric configuration of the sleeve (4) during assembly of the constituent elements of the motor (1).

2. Motor according to claim 1, **characterized in that** the zone of lesser thickness is defined by a counterbore (19) or a groove (18; 180) provided in the wall (17; 170).

3. Motor according to claim 1, **characterized in that** the magnetic restriction zone is formed by at least one wall portion made of at least one low-magnetic or non-magnetic material.

4. Method for manufacturing a motor according to any of the preceding claims, **characterized in that** it comprises at least the following steps:
- a) stacking pre-machined metal rings (15; 150) configured according to the cross-section of the stator (3) with partitions (16; 160) delimiting open volumes for receiving the coils, the stacking being carried out over a height corresponding to the desired length of the stator (3),
- b) winding copper wires around the partitions (16; 160) on the stack obtained in step a),
- c) mounting, by shrink-fitting, the stack obtained in step b) in a sleeve (4), with angular indexing by lugs (9) and notches (10) ensuring the positioning of the stack relative to the sleeve (4),
- d) inserting the rotor (2) into the receiving volume of the stator (3),
- e) shaping the part of the copper wires visible at the ends or overhang,
- f) final overmolding of the elements of the motor with resin.

5. Method according to claim 4, **characterized in that,** after step e) and before step f), an additional step g) of grinding the external and internal diameters of the stator is carried out.

6. Method according to claim 4, **characterized in that** the sleeve (4) is obtained by stacking rings.

7. Method according to claim 6, **characterized in that** the stacking of constituent rings of the sleeve (4) is carried out independently of steps a) to f).
